# EUROPEAN PATENT SPECIFICATION

(11) **EP 1 252 956 B1**
(45) Date of publication and mention of the grant of the patent: **28.07.2004**
(21) Application number: 02076570.7
(22) Date of filing: 22.04.2002
(51) Int. Cl.: B23D 47/12, B28D 1/04

(54) **Cutting or sawing machine and method for working an object**
Schneide- oder Sägemaschine und Methode zum Bearbeiten eines Objekts
Machine de coupe ou scie et procédé pour travailler un objet

(30) Priority: 23.04.2001 SE 0101439
(43) Date of publication of application: 30.10.2002
(73) Proprietor: Globe-Invent Aktiebolag, 472 93 Svanesund (SE)
(72) Inventor: Johansson, Mats, 472 93 Svanesund (SE)
(74) Representative: Hynell, Magnus

(56) References cited:
- EP-A- 0 940 237
- US-A- 3 547 096
- US-A- 3 893 240
- US-A- 4 662 684
- US-A- 4 717 205
- US-A- 6 139 477

## Description

### TECHNICAL FIELD

The invention relates to a cutting or sawing machine according to the preamble of claim 1 (see US 4 717 205). The invention also concerns a method for working an object by means of the machine, according to claim 34.

### BACKGROUND OF THE INVENTION

In, i.e., the building industry, e.g., cutting openings for doors, windows, ventilation ducts, stairways, foundations, etc. through, e.g., walls, roofs and floors are frequent operations. Objects of this type often are thick and they typically consist of reinforced concrete, stone, brick, masonry, metal, wallboard, panelling, and all similar building materials, or various composite building materials. Various techniques are employed for performing the cutting or sawing operations. In the first place, however, mechanically working machines are used, such as chain saw machines, machines of the type defined in the preamble and so called ring cutters. These machines have various advantages as well as disadvantages.

Chain saw machines employed for sawing hard materials, such as stone and concrete are diamond-tipped. Typically these sawing machines have a guide bar and a saw chain of a considerable length, which makes it possible to cut or to penetrate, respectively, thick objects. Among the drawbacks may be mentioned that the wear of the links of the saw chain is severe when cutting materials of the mentioned type, which shortens the actual life of the saw chain. This is a serious drawback, especially because diamond tipped saw chains are very expensive. Another drawback is that very powerful engines are required for this type of sawing machines. Further, also the guide bar and the drive wheels are subjected to wear because of the slurry that is generated during the work, especially because the chain slides in a groove in the guide bar and because only water is used as a lubricant. The guide bar and the drive wheel therefore also frequently need to be replaced.

As far as cutting or sawing machines having rotating cutting or sawing disks of a conventional type are concerned, the maximal cutting depth is limited to less than half the diameter of the used cutting or sawing blade. This is due to the fact that the rotation axis of the disk (blade), i.e. its spindle, always is longer than widths of the kerf (cut) which the blade makes in the object in question. When larger objects shall be cut or, e.g., when openings shall be made in thick walls, roofs or floors, machines having very large, rotating blades therefore are used. But the larger the blades are, the more powerful driving motors are required, which makes the driving motor correspondingly heavy. Those conventional machines which are used for cutting and/or sawing very thick objects therefore are not hand-held machines. Vice versa, hand-held cutting and sawing machines of conventional type can be used only for working comparatively thin objects. A machine belonging to this category is shown, e.g., in US-A-3,583,106.

Cutting and sawing machines of the ring saw type, e.g. a machine of the type which is shown in US-A-4,646,607, has an off-centre drive of the cutter blade, which means that it has no hindering central spindle, which allows cutting to greater depths than half the diameter of the saw blade. However, the diameter of hand-held machines of the ring saw type is limited because of the weight of the machine, which will be considerably large if the blade is large, especially as big blades also need to be comparatively thick in order to get a sufficient strength. As is the case for conventional cutting machines, also the necessary drive power is increased in relation to the diameter of the blade, which further increases the total weight of the machine. When the blade is diamond-tipped also the costs for the diamond-tipping is increased very much if the diameter as well as the thickness of the blade are increased. Therefore, there are technical as well as economical limitations of the blade size, which in turn restrict the feasibility of this type of machines as far as the thickness of the object to be worked is concerned.

So called flat sawing machines is a special type of saw machines. The saw blade of a machine of this type has one side which is flat, i.e. it is void of projecting parts. On the opposite side there is a spindle, which is driven by a driving assembly at the side of the saw blade. Machines of this type is used in order to make sawing, e.g., into a wall in the corner between two walls possible, in which case the flat side of the saw blade is applied close to one of the walls, such that the saw blade can saw into the other wall in the corner between the two walls. Nor this saw machine, however, can be used for cutting walls which are thicker than slightly less than half the diameter of the saw/cutting blade.

Further it is known through WO 01/23157 to dig into an object, more particularly into a rock formation desired to be mined in connection with a quarrying process, wherein two slots are cut into the rock at a distance from one another, where after the rock material between the slots are crushed in a subsequent operation. The tools in this case are rotated about a joint axle having axle spindles which project laterally from the outer sides of the outer tools of the tool assembly. In the same was as in connection with conventional cutting machines these axle spindles set a limit for the penetration depth. Alternatively, a very broad trench may be achieved through several working operations, which allows working deeper into the rock formation, so that finally a ditch-like trench having sloping walls is achieved.

In light of the above background there is a long felt need of machines of the type defined in the above preamble, by means of which it is possible to cut or saw deeper than what has been possible to do according to prior art, employing disk shaped, rotatable tools having a certain diameter.

It is particularly desirable to make it easy to handle the machine, not only during the sawing or corresponding operation but also, e.g. in connection with exchange of replacement parts, in the first place of the tools. It is also desirable to reduce the number of machine components which must handled in connection with change of tools. For these and other reasons, it is desirable to be able to use tool units which include a tool and a driving member as will be described in the following disclosure and to adapt the cutting or sawing machine to such tool units.

### DISCLOSURE OF THE INVENTION

It is the purpose of the invention to address the above mentioned problems and to provide a machine of the type which is mentioned in the preamble, by means of which machine it is possible to cut or penetrate thicker objects than what has been previously possible by means of disk shaped, rotatable tools having a certain diameter. The invention also relates to a method for working an object by means of such a machine.

According to a first aspect of the machine of the invention, the invention is characterized in that that side of the peripheral edge portion which is part of said second side of the tool defines a plane which forms a limit of the, in the axial direction, maximally projecting part of the tool assembly, that the entire machine body is provided at a distance from the tool assembly with reference to the radial direction of the tool assembly, and that the tool carrier, which is elongated, extends from the machine body over said distance beyond said centre of rotation.

According to a first aspect of the method of the invention, the method is characterised in that at least two substantially parallel kerfs are established to a certain depth in the object to be worked, that at least part of the material between the kerfs is removed, so that a wider groove is established in the object, and that at least one of the kerfs then is made deeper in the extension of said kerfs.

Typically, the width of the tool carrier is substantially larger than its thickness, wherein the width is the extension of the tool carrier in a plane which is parallel with the plane of the tool/the tools and perpendicular to the longitudinal direction of the tool carrier. Preferably, the tool carrier consists of an elongated bar of a shape which is conventional for guide bars in conventional chain saw machines, but also other designs, preferably flat bars, having a sufficient bending resistance in the radial direction of the tool/tools are conceivable. In principle, the tool carrier, which basically determines the maximal penetration depth of the tools into the object to be worked, may have a length which is limited only by practical circumstances in the same way as applies for a chain saw machine, i.e. circumstances such as the weight of the machine, which of course increases the longer the tool carrier is, which in turn makes the manoeuvrability of the machine more difficult.

According to still another aspect of the invention, the said driving member forms part of a driving wheel having at least one circumferential driving surface. The driving wheel may comprise a first part and a second part, each of said parts having a circumferential driving surface, said driving surfaces being provided on each side of a plane, which is perpendicular to the axle of rotation of the driving wheel and located between said parts. Suitably, the two driving surfaces of the driving wheel, one on each one of said parts, are identically designed. Also the denomination "driving wheel half' is used in this context as a denomination of said driving members, when two such driving members in combination form a driving wheel. According to a preferred embodiment, the driving surface or driving surfaces form at least one power transmission groove for a power transmission device. More particularly, according to a preferred embodiment, the two driving surfaces consist of bevelled surfaces on said parts, said bevelled surfaces between them forming a V-belt groove for a power transmission device in the form of a V-belt. Also, other kinds of power transmission devices, however, are conceivable, e.g. a toothed belt, in which case the two driving surfaces may be toothed and form a pair of grooves for the toothed belt, which cooperates with the teeth of said grooves.

According to a preferred embodiment, the parts of the driving wheel, each of which comprising a circumferential driving surface, are provided on each side of the tool carrier. Further, according to that embodiment, a bearing is provided in the front end of the tool carrier. According to another feature of that embodiment, the driving wheel has an axle, which extends through the tool carrier between said two driving wheel parts, and is connected to said driving wheel parts, and is journalled in the bearing in the tool carrier. Suitably, each of the two driving wheel parts has an axle spindle, said axle spindles extending towards one another and forming in combination said axle. This makes it possible, according to an aspect of the invention, to design the two driving wheel parts, including the axle spindles belonging to them, identically. This is particularly advantageous, when the respective driving member is connected to a tool belonging to it to form a tool unit.

Thus, according to an aspect of the invention, a rotatable tool is provided on each side of the tool carrier, wherein the tools are connected to one another by an axle, which extends through the tool carrier and is journalled in the tool carrier. Suitably, according to said aspect, the axle is formed by two axle spindles, each of which is connected to a respective tool and from opposite directions extends into the tool carrier.

According to a preferred embodiment of the machine according to the invention, the machine is characterized in that the tool assembly comprises at least two parallel, coaxial tools, comprising two outer tools, that each of said outer tools has a first side which is an inner side, a second side which is an outer side, and a peripheral edge portion which is the working part of the tool, and that that side of the peripheral edge portion of the outer tools which is part of the outer side of respective tool defines a plane, which forms a limit of the, in the radial direction, maximally projecting parts of the tool assembly in the region of said outer sides.

The number of rotatable, coaxial tools included in the tool assembly may be more than two, but the preferred number is two. This facilitates the establishment of two parallel kerfs (cuts) with a suitable distance between the kerfs, which makes the removal of the material between the kerfs desirably easy. The tools of the tool assembly, whether the tool assembly includes two or more tools, may have equally large diameters, in which case the distance between the outer tools should be smaller than the radius of the tools.

Preferably, however, the tools have differently large diameters, in which the distance between the outer tools of the tool assembly is smaller than the radius of the smallest tool.

The smallest tool diameter is normally at least 60 mm, typically at least 80 mm, regardless the diameters of the tools are equally or differently large. In the case the tools have differently large diameters, the diameter of the smallest tool normally is max. 400 mm, preferably max. 250 mm, and suitably max. 150 mm. The larger tool may have a diameter which is at least 40 mm, preferably at least 60 mm, but not more than 100 mm larger diameter than the smallest tool. In the case when the tools have equal diameters, when the number of tools is two, the diameter should be at least 80 mm, but should normally not exceed 500 mm. Preferably, the diameter is 60 to 300 mm, suitably 80 to 250 mm. A very important advantage with small diameters before large diameters is that tools having a small diameter do not require as large engine power as tools having larger diameters. The reason why conventional cutting and saw machines nevertheless are provided with tools having large, and in some cases very large, diameters, is that large diameters are required in conventional machines for the achievement of a desired penetration depth, a condition which is eliminated by the invention.

With reference to the above statements concerning conceivable tool diameters, the distance between the tools, according to an aspect of the invention, should be at least 5 and max. 100 mm, but even when the tool diameters lie within the upper part of the above mentioned dimension ranges, it is advantageous if the distance between the tools is small, and therefore the distance should be max. 50 mm, suitably max. 20 mm. A very important advantage with a short distance between the tools is that this essentially facilitates the removal of the material between the kerfs (cuts). If the distance between the kerfs is for instance not larger than the order of 10 or 15 mm, the material may, even if the material consists of, e.g., concrete or brick, even loosen successively as the kerfs are established, because of vibrations and friction between the tools and the material between the kerfs. Possibly, it may be necessary that the operator wobbles or sways the machine slightly in the lateral directions during the working operation. In other words, the need of a subsequent clearing operation for removing the material between the kerfs may be completely eliminated, or at least may such clearing operation be essentially facilitated.

Preferably, the tool or each tool, respectively is included in a tool unit comprising at least one disk shaped tool having a first side, a second side, a peripheral edge portion which is the working part of the tool, and at least one driving member which is coaxial with the tool. Such a tool unit is further characterized in that the driving member is connected or connectable to the first side of the tool, that that side of the peripheral edge portion which is part of said second side of tool defines a plane, which forms a limit of the, in the axial direction, maximally projecting part of the tool unit, and that the driving member has at least one circumferential driving surface provided to be able to cooperate with a power transmission.

According to a preferred embodiment of tool unit, at least the main part of the second side of the tool is essentially flat inside of the peripheral edge portion, which is the working part of the tool. The tool and the driving member of the tool unit may be made as two separate components, which subsequently have been permanently united to form an integrated unit. As an alternative, the tool and the driving member are made of a blank, which has been worked to adopt the final shape of tool unit. In the latter case, the driving member may be formed of a central portion of the tool blank, which has been pressed out in the axial direction of the tool unit and thereafter has been worked to achieve the final shape of the driving member.

According to still another embodiment of the tool unit, the driving member and the tool consist of two separate components, which can be connected by means of follower and coupling members to form a tool unit. If, for example, the tool consists of a thin saw blade and if the central portion of the saw blade is pressed out to form a recess on that side which is opposite the side where the driving member is provided, a coupling member, e.g. a screw head or a nut, may be provided in that recess and pins or other followers may be provided on the driving member, said pins or other followers matching apertures in the pressed out central portion of the tool. In the case the tool instead consists of a cutter disk, a head of a screw which functions as a coupling member may be recessed in the cutter disk on the outer side thereof. Also in that case, followers in the form of pins and holes may be provided between the tool and the driving member/the driving wheel half for the purpose of providing a dismountable tool unit having a replaceable tool.

Various types of power transmission devices may be employed according to the invention, e.g. endless V-belts, toothed belts as mentioned above, etc., but in principle also an endless roller chain can be conceived, particularly a comparatively broad roller chain, cooperating with driving members in the form of sprockets, each of which is connected or connectable to a tool on one or both sides of the tool carrier.

According to a preferred embodiment of the machine of the invention, the machine comprises guard devices for the power transmission device, said guard devices comprising an edge guard which extends on the outer side of the power transmission device along at least a section thereof which is exposed to the environment. Such an edge guard may comprise a bent metal rail having at least as large width as the power transmission device, but smaller or at least not larger width than the distance between the disk shaped tools having a driving member on said first sides which face one another. Further, said guard devices may comprise side guards on each side of the power transmission device, the distance between the outer surfaces of the side guards being smaller than the axial extension of the tool assembly. The distance between the outer sides of the side guards in other words is smaller than the width of the cleared groove having flat walls that is established in the object, such that also the side guards may be entered into the groove as the tools successively are caused to penetrate deeper into the object.

According to the typical embodiment of the invention, the edge guard is provided at a comparatively short distance outside the tool carrier and at a very short distance outside the power transmission device, i.e. the driving belt or the like. It is, however, conceivable to provide the edge guard or corresponding at a substantial distance from the tool carrier, which makes it possible to provide driving wheels with different diameters on the machine, i.e. driving wheels having either a small or a substantially larger diameter, as well as driving wheels having intermediate sizes, adapted to the diameter of the tool, or to the diameters of the tools, in order to make it possible that the tools will get a desired periphery speed, also when the driving belt or corresponding power transmission device has a given speed.

The power source of the drive machinery is provided in the machine body. The power source may consist, e.g., of a combustion engine, an electric, hydraulic, or pneumatic motor. It is true that the field of application of the machine of the invention is not limited to the building industry, but that field is a very important field of use for the machine. Combustion engine powered machines, however, are not suitable to be used inside buildings for health-impairing reasons. At many such working sites, however, hydraulic or pneumatic systems are available, which makes it possible to use hydraulically or pneumatically powered machines. But also electricity usually is available in building work places. Electric powering of the machine of the invention, e.g., for that reason is suitable.

Further features and aspects of the invention will be apparent from the appending claims and from the following detailed description of the cutting and saw machine according to the invention and the method to work with said machine.

### BRIEF DESCRIPTION OF DRAWINGS

Embodiments of the invention will be described in the following with reference to the accompanying drawings, in which
- Fig. 1: shows a schematical side view of parts of a machine according to the invention, including a tool unit according to a preferred, first embodiment and a tool guard brought to a front functional position,
- Fig. 2: shows the machine according to Fig. 1 with the tool guard in a withdrawn position allowing change of tool unit,

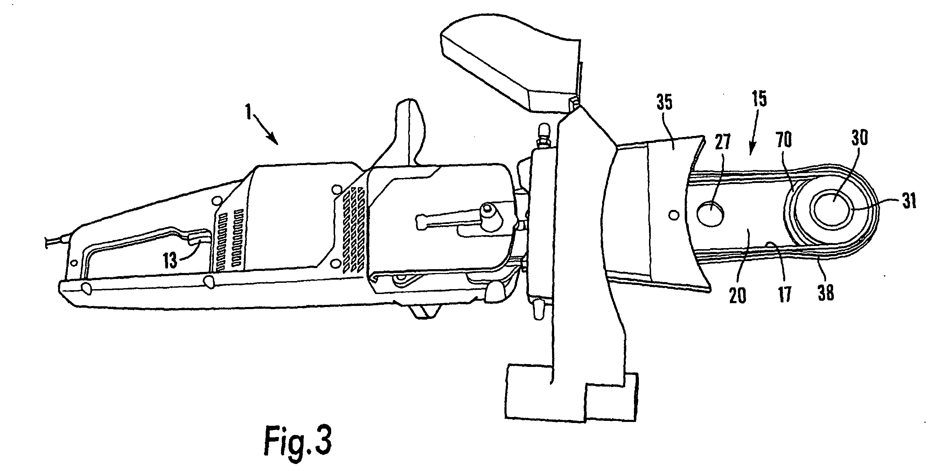

- Fig. 3: shows a schematical side view of the machine according to Fig. 2, the tool unit being removed,
- Fig. 4: shows a schematical side view of the machine according to a second embodiment of the invention including two rotatable tool units, which are concentrically arranged with a joint centre axis,
- Fig. 5: shows a tool and a driving member/driving wheel half, which form a tool unit according to a preferred embodiment,
- Fig. 6: shows a driving member/a driving wheel half,
- Fig. 7: at a larger scale shows a front portion of the machine according to Fig. 3 without tool unit,
- Fig. 8: is a view along the line VIII-VIII in Fig. 2,
- Fig. 9: shows a view along the line IX-IX in Fig. 4,
- Fig. 10: shows an axial cut through a driving wheel half/a driving member,
- Figs. 11A-D: schematically show a section through the object which is being worked, illustrating an embodiment of the working principle of the invention,
- Fig. 12: schematically shows a side view of an electrically powered cutting or sawing machine according to a conceived embodiment of the invention, and
- Fig. 13: shows the same machine from above.

### DETAILED DESCRIPTION OF EMBODIMENTS

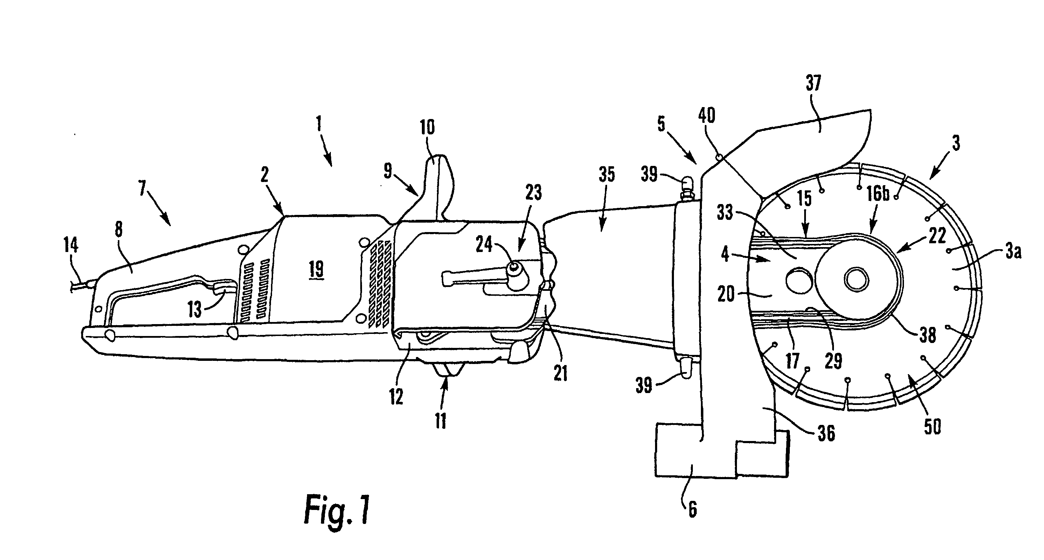

With reference to Fig. 1 there is schematically and in a side view shown parts of a first embodiment of a cutting or sawing machine 1 for working an object, comprising a rotatable, disk shaped tool 3 for rotating working of objects, working pieces or blanks, including cutting and sawing in objects such as building constructions/materials having a large extension, for example concrete constructions, or in more limited working pieces, such as stone blocks. The main part of the machine 1 comprises a power source which not necessarily has to be located in direct connection to the tool 3 but which transmits a driving force to other main parts via a suitable power transmission.

In the embodiments shown in the drawings, the power force, however, consists of a motor in a machine body 2, which is located at a radial distance from the tool 3. Between the machine body 2 and the tool 3 there is a unit 4, denominated transmission and carrying unit, provided to transmit the power from the motor in the machine body to the tool 3 and for locating said tool 3 at a certain, defined distance from the machine body 2, which distance considerably may exceed the diameter of the tool 3 of all so far conventionally hand-held or otherwise employed for rotational working of movable working machines. Further, the machine 1 may include an adjustable tool guard 5, as according to the embodiments shown in the drawings, and a retainer 6 for a possible vacuum dust cleaner device. The dust cleaner device or devices, however, are not shown in any detail. Further devices, e.g., for spraying water, may also be applied.

The machine body 2 thus preferably and suitably may consist of a machine body of known, conventional hand-held or mobile cutting or sawing machine, e.g. a conventional motor saw body, for example a conventional motor saw body with a combustion engine, an electric motor powered saw body, including an electric motor, or a machine body including a hydraulic motor or a pneumatic motor.

In the preferred embodiments which are specifically shown in the drawings, the machine body 2, however, consists of a hand-held unit comprising an electric motor, a rear gripping appliance 7 with a control handle 8 and a front gripping appliance 9 with a control handle 10 for the provision of a good control of the machine 1 when pressing the tool against the object in question, for example in a first saw kerf, and then for achieving a required stability during the rest of the working until the desired result, i.e. the desired sawing depth, has been achieved. In front of the front control handle 10, i.e. in the direction towards the tool 3, there is mounted a control handle guard 11 of any known suitable model and function.

The machine body 2 also comprises a chassis 12. The motor in question, a motor control 13 with an optional variable-speed gear drive and coupling, various conduits and cables for example cooling water, hydraulic oil, electric power supply, vacuum dust cleaning, etc. are mounted on or to the chassis 12 (certain parts being not shown in detail). The motor control 13 is suitably provided in a conventional way at the rear control handle 8. In connection to the motor in question there is provided a bearing housing with a suitable bearing, from which a not shown rotatable axle shaft projects, on which shaft there is provided a first driving wheel (not shown), which suitably consists of a gear, a belt pulley, or any other suitable drive for moving a power transmission device 17 along, around or inside the transmission and carrying unit 4 for driving a second, front driving wheel 16b which is integrated with the tool 3.

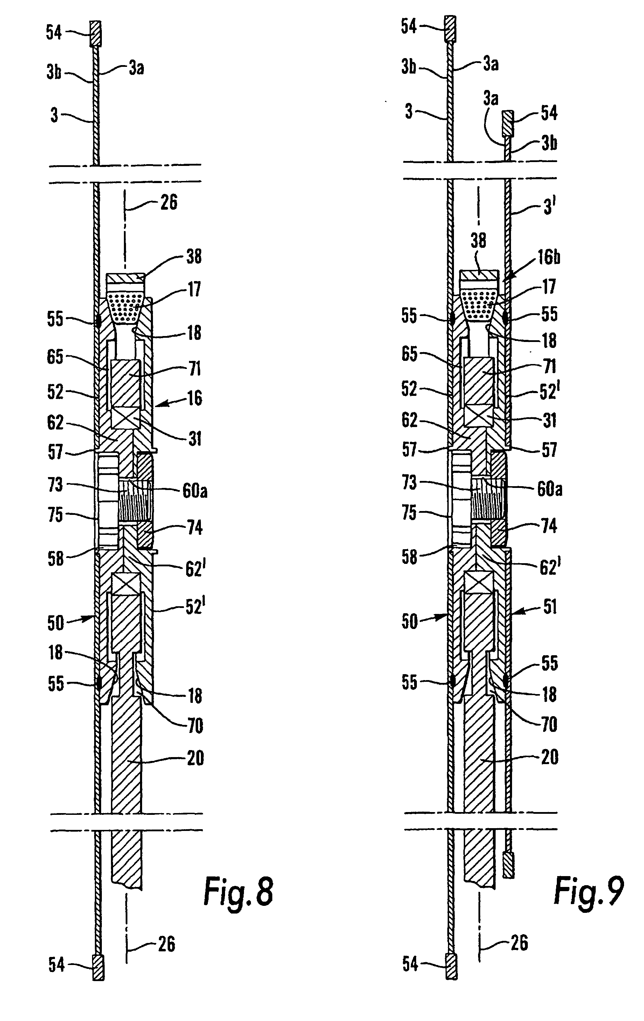

The said power transmission device 17 preferably consists of a flexible, endless device 17 in the form of for example a chain, driving belt or V-belt 17, driving band or any other similar, suitable device, the cross section and construction of which are adapted to the rear and front driving wheels/driving members in question. In the case of V-belt drive, for example, the two driving wheels comprise a wedge shaped, peripheric groove 18, see Figs. 8, 9. The invention, however, is not restricted to only flexible, endless transmission devices such as V-belts 17. To the extent that other possible power transmission devices exist, or can be suggested, also such ones may be employed in connection with the present invention, such as for example a series of cooperating gears along the transmission and carrying unit 4.

All the machine elements mentioned in the two paragraphs above, but not shown in detail, consist of well known machine details. Therefore they are not described in detail or shown but are located behind a number of guards 19 enclosing said details which may be dismounted in a suitable way.

The transmission and carrying unit 4 comprises an elongated construction in the form of a flat bar 20 for carrying the tool 3, also referred to as tool carrier in the following, including or comprising the front driving wheel 16b and the transmission device 17 at a certain, defined distance from the machine body 2. The bar 20 comprises a first, inner end 21, which is provided to be mounted to the machine body 2 on a fixed but dismountable way, which is described more in detail below, and a second, outer end, which is referred to as the bar point 22 below, at which end the tool 3 and the transmission device 17 are rotatably mounted according to the embodiment in question.

At the rear end 21 of the bar 20 a not shown fastening and stretching device 23 is provided, suitably in any form of screw joint which may be eased, said joint in a manner per se comprising fastening members 24, e.g. consisting of a number of screws and nuts, for securing the bar 20 to the machine body 2, and a cross-shaped opening through the bar 20. By the provision of said opening and fastening members, the bar 20 can be adjusted in a suitable axial and/or transversal direction along the centre plane 26, which is common for the rear driving wheel and the longitudinal extension of the bar 20 for the achievement of a stretching or unstretching in said centre plane of the flexible, endless transmission device 17, relative to the two driving wheels. Along the flat sides of the bar 20 there are a number of weight and material reducing openings 27. Between these openings 27 there are also a number of smaller, threaded holes 28 for mounting a blade guard 5 to the bar 20.

The inner end 21 of the bar 20 may have a blunt basic shape and a rectangular cross section towards the opposite end 22. More specifically, the rear short end is arranged at a square angle relative to the longitudinal edges 29 of the bar 20. The short end is adjustably mounted adjacent to the rear driving wheel, and due to the above mentioned fastening and stretching device 23, the short end 21 can be moved in a direction from or towards the driving wheel 16a, wherein the flexible, endless transmission device 17, which in the present case especially consists of a V-belt 17, can be dismounted when it is worn out and be replaced by a new one. According to the shown embodiments, the transmission device 17 is provided to run along and parallel with the edges 29 of the bar 20 in the centre plane 26, mentioned above, of the driving wheels and of the bar 20, but at a distance from the edges 29 of the bar 20.

In the not shown embodiments it is, however, conceivable that the transmission device 17 instead runs in a groove provided in said bar edges and not as according to the embodiments shown in the drawings where the V-belt runs freely from the bar edges and is provided to contact only the peripheries of the driving wheels.

The second, outer end, the bar tip 22, has a rounded shape according to the embodiment and comprises a hole 30 in the bar 20, which is central relative to said rounded shape, and adapted for a suitable bearing 31, e.g. a ball bearing or a sliding bearing, said bearing 31 having a fit, i.e. diameter, which only provides such a sufficient play that the bearing 31 easily can be mounted in said central hole 30. It is also conceivable that the bearing 31 in any suitable known manner is fastened in the hole, e.g. through shrink fit. The outer end 22 may also comprise a recess in both the bar surfaces for the outer driving wheel, which recesses also may serve as a circular sliding surface for contacting surfaces of the driving wheel.

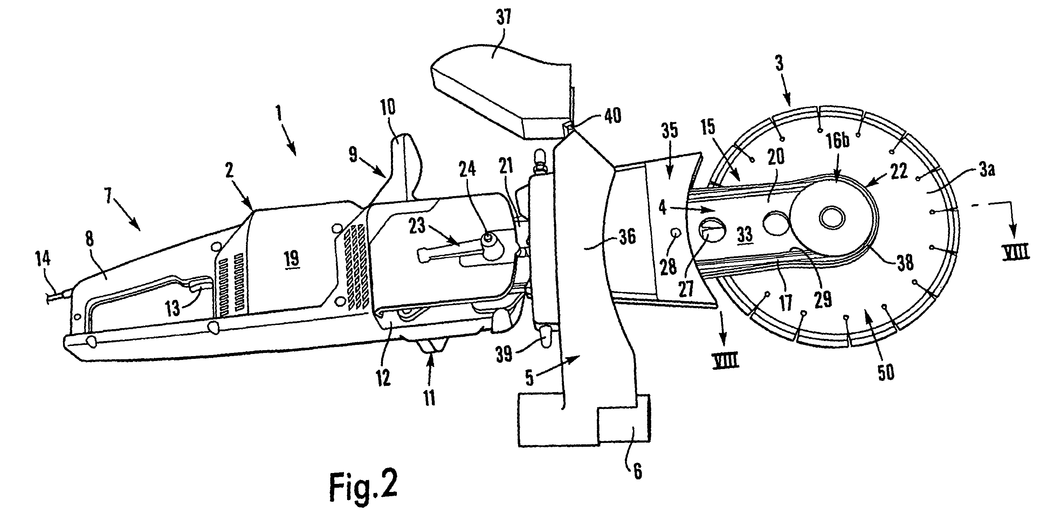

With reference to the preferred embodiment of the guard devices of the machine, said devices include the tool guard 5 shown schematically and in a side view in Figs. 1 and 2, and a fixedly mounted, double walled side guard 35 for the transmission and carrying device 4. The tool guard 5 comprises a blade guard 36 which is displaceably provided along the bar 20 and along said double walled side guard 35, said blade guard also comprising a section 37 which can be folded from the rest of the displaceable blade guard 36. Further, the guard devices include an edge guard 38 for the transmission device, i.e. the flexible, endless V-belt 17 according to the shown embodiments, said edge guard 38 running along the outside of the V-belt 17 and around the front, outer point of the bar 20 or at least along its longitudinal edges 29. The thickness of the side guard 35, i.e. the transversal distance between the outer surfaces of the side guard, is smaller than the distance between the outer sides of the tools 3, 3', i.e. said second sides, which means that the side guard 35 can be entered into the wide groove, which, according to the method of using the machine of the invention is established in the object that is being worked, when the material between the kerfs (cuts) which have been made by the tools, has been removed, and when the wide groove having flat and parallel side walls has reached such a depth that also the side guard 35 can be entered in the groove, when the blade guard 36 has been withdrawn along the side guard 35.

The double walled side guard 35 suitably has one end welded to one outside 33 of the bar 20, while the other end is fastened by screwing such that the transmission device 17 can be replaced simply and efficiently just by removing a guard plate 35. The two plates of the side guard 35, which extend in parallel along the bar 20 to a certain distance outside of the said edge guard 38, guarantee that the accident risk is minimised, at the same time as the movable wear parts are protected from dust, water, etc. The side guard 35 also functions as a guide for the displaceably provided blade guard 36, in connection with which one or more locking members 39 are provided for setting the position of the blade guard 36 along the side guard 35 and hence also setting the starting position 37 of the folding guard 37. The latter namely is provided by means of a suitable hinge 40 at one end of the blade guard 36, allowing it to be folded from an active position in which it protects the tool 3. The displaceable blade guard 36 and the folding guard 37 in combination have an L-like shape as viewed from the side and suitably a U- or V-shaped cross-section in order to protect it, e.g., from dust and water that may be sprayed from the tool. At the end which is opposite to the folding guard 37 the holding device 6 for further devices is provided. Due to the design of the tool guard 5, the arrangement of the tool guard as well as the dust vacuum cleaner device, for example, the scatter of dust and water therefore will be minimal.

The said locking members 39 consist of three screws according to the shown embodiments; one screw provided to act from the side against the side guard 35 and two further screws provided to act against the edge guard 38 from different sides of the bar 20.

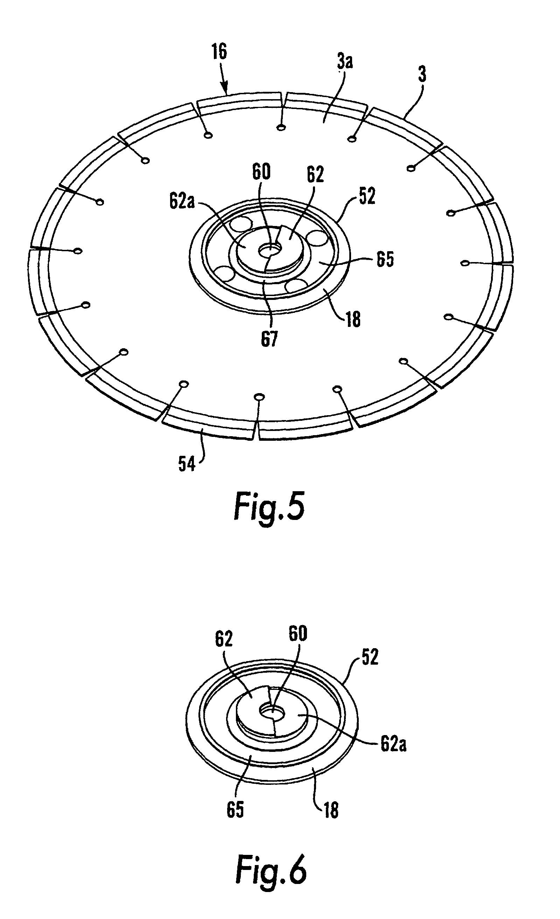

With reference to Figs. 5-10 there will now in the following be described more in detail how the tool unit or tool units, which are characteristic for an aspect of the invention and which have been designated 50 and 51, respectively, are designed, and also how the front driving wheel 16b is designed and provided at the outer end of the bar 20, said outer end also being referred to as the bar point 22, and further how the power transmission device, said transmission device according to the shown embodiment being a driving belt of the V-belt type 17, and the edge guard 38 are provided.

A tool unit 50 consists of a disk shaped, rotatable tool, such as the saw or cutter blade 3 on the machine 1 shown in Figs. 1, 2 and 4, and a driving wheel half 52, which is also referred to as driving member, when it is united with the tool 3. The tool 3 consists of a flat disk, the peripheral edge portion 54 of which is thicker, i.e. has a larger lateral extension than the rest of the tool, and constitutes the working part of the tool 3. The edge portion 54, e.g., may be equipped/tipped with diamonds or other grinding agents, be provided with teeth, such as on a conventional saw blade, or consist of the edge of e.g. a carborundum disk. The tool 3 and the driving wheel half/driving member 52 may be united with one another, e.g., through welding, soldering, gluing, riveting, or in any other mode, such as laser welding. According to the embodiment, the tool 3 and the driving member 52 of the tool unit 50 are united with one another by spot welding. The spot welds are designated 55 in Fig. 8 and Fig. 9.

The driving wheel half/driving member 52 which is integrated with the disk shaped tool 3 in the integrated tool unit 50, has a side 56 which is flat in order to be able to contact the tool 3 of the integrated tool unit 50. An annular projection 57 is designed such that it can extend into and fit in a central hole 58 of the tool 3. Radially inside of the annular projection 57 there is a circular recess 59. A central hole 60 extends through the driving wheel half/driving member 52.

On the opposite side of the driving wheel half 52 there is a central axle part 62, which also can be defined as an axle spindle. The peripheral part 63 of the driving wheel half/driving member 52 is provided with a bevelled surface 64 on that side which is turned from the tool 3 of the integrated tool unit 50. Between the peripheral part 63 and the axle part 62 there is a major, annular recess 65, so that a thin web 66 is formed between the recess 65 and the flat side 56. Radially inside of the recess 65 there is an annular, thicker portion 67.

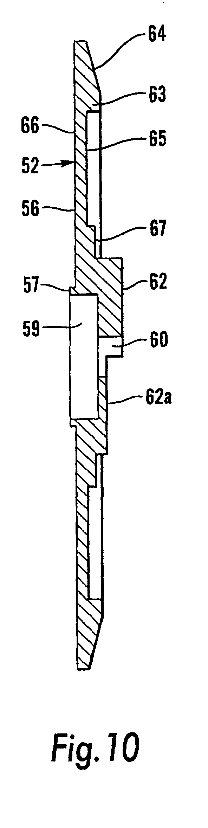

The front driving wheel 16b is formed of two, according to the embodiment, identically shaped driving wheel halves/driving members 52, which are provided such that the axle parts/axle spindles 62, 62' are turned towards one another to form a parted wheel shaft. This, however, does not prevent the driving wheel halves/driving members from having different shapes, provided their functional basic principles are the same. In order to provide a coupling between the axle parts 62, 62', the axle part of each driving wheel half 52, 52', according to the embodiment, is cut-down a distance in that part of the axle parts 62, 62' which in the mounted driving wheel 16b are turned towards one another. One such cut-down portion has been designated 62a in Fig. 10 and is semicircular. It should be understood that also other coupling devices can be conceived, e.g. pins and holes in and on the axle parts/axle spindles 62, 62' which are turned towards one another.

Fig. 8 shows how the driving wheel 16b is formed of two driving wheel halves 52, 52' of the type which has been described with reference to Fig. 10, which driving wheel halves are brought together against one another. In order to provide the coupling between the driving wheel halves 52, 52', one of the driving wheel halves is turned 180° relative to the other one, so that the cut-down portion 62a of one of the driving wheel halves abuts the not cut-down axle part of the other driving wheel half. Between the thus brought together driving wheel halves there is formed a wedge-shaped groove 18, Fig. 8, for a V-belt 17 between the bevelled surfaces 64 of the peripheral parts of the driving wheel halves.

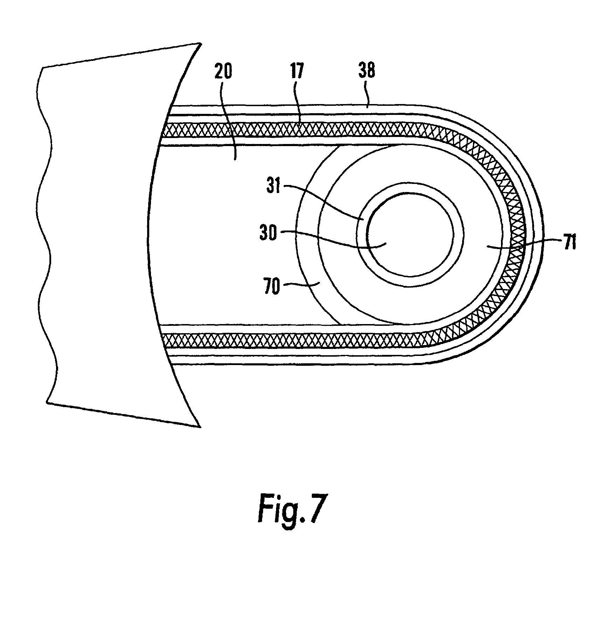

Reference is now also made to Fig. 7, which shows the region of the tip portion 22 of the bar 20, including the centrally placed hole 30, in which the bearing 31 is permanently fastened, e.g., by soldering or by press fit. At a distance inside of the hole 30 there is a circular recess 70, which is concentric with the hole 30 and dimensioned and located such that it can accommodate the peripheral part 63 of a driving wheel half/driving member 52. Fig. 7 also shows how the V-belt 17 extends along the bar 20 and around the bar tip 22 at a small distance from the bar 20 and is surrounded by the edge guard 38 at a small distance outside of the V-belt 17. The edge guard 38 consists of a rail, suitably a steel rail having the same breadth as the V-belt 17. It should be mentioned that the recess 70 on both sides of the bar can be made substantially broader than what is shown in Fig. 7 in order to accommodate the peripheral parts 63 of smaller as well as of larger driving wheel halves, in order that the machine shall be able to work with driving wheels with diameters within a certain dimensional range according to an embodiment of the invention.

During the assembly, the tool unit 50 with the axle part 62 is brought into the hole 30 in the bar tip 22 until the annular, thicker portion 67 abuts the bearing 31. In a corresponding way the other driving wheel half 52' is moved from the opposite direction into the hole 30, turned 180° relative to the first inserted driving wheel half/driving member 52, so that the shaft parts 62 of the two driving wheel halves will engage one another, wherein also the latest inserted driving wheel half will abut the bearing 31 with its annular thicker portion 67. The annular part 71, which surrounds the bearing 31, and which is restricted rearwise by the annular recess 70, is accommodated in the annular recess 65 of the tool driving wheel halves. The two driving wheel halves 52, 52' are fixed to one another by means of a nut 74 and a screw 73, which extends through the through hole 60a which is formed in the shaft, which in turn is formed of the two axle parts 62. A screw head 75 and the nut 74 are accommodated in the recesses 59 of the driving wheel halves 52, 52'. By axial displacement of the bar 20 outwards from the machine body 2 via the fastening and stretching device 23, i.e., by forward movement of the bar 20, the V-belt 17 then is caused to adopt a proper position in the wedge shaped groove 18 with a suitable contact pressure against the two bevelled surfaces 64 which between them form the wedge shaped groove 18.

The embodiment shown in Fig. 9 deviates from that one which has been described with reference to Fig. 8 only therein that the two driving wheel halves 52, 52' constitute driving members in integrated tool units 50 and 51, respectively. The tool which is included in the tool unit 51 has been designated 3' in Fig. 9 and has a smaller diameter than the tool 3 which is included in the tool unit 50. In other respects, the design is the same as has been described with reference to Fig. 8, as well as the mode of assembly.

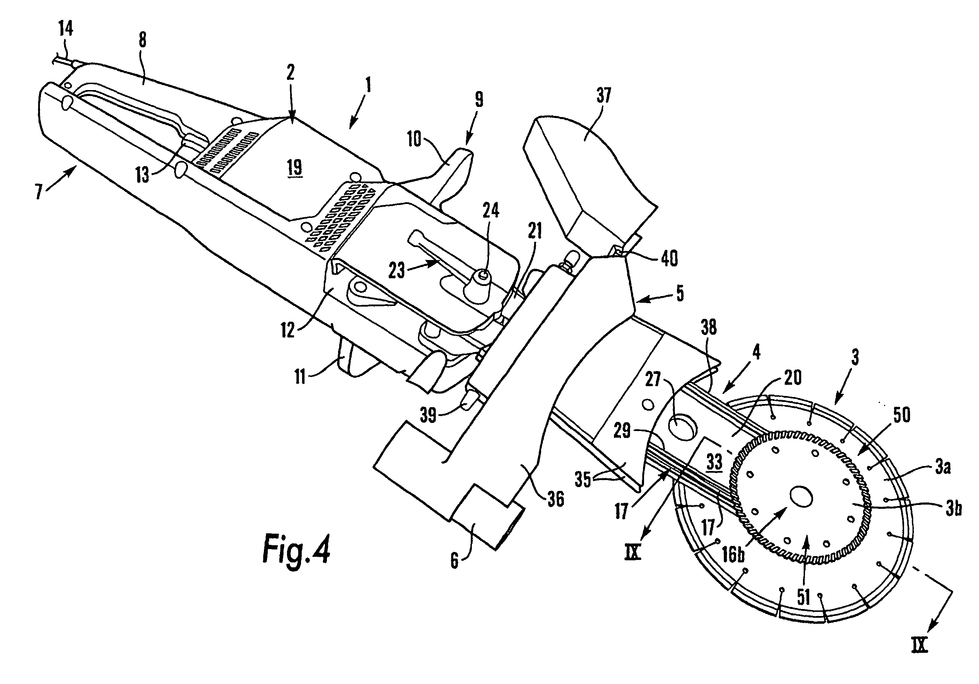

The method of working with the machine 1 and with the tool unit/tool units 50, 51 according to the invention, now also will be further explained. It is assumed that the machine 1 is equipped with two tool units 50, 51, i.e. in the way which is shown in Fig. 4 and Fig. 9. Before starting the work, the tool guard 5 is moved forwards to the functional position which is shown in Fig. 1. The motor in the machine body 2 is started. The operator controls the machine 1 so that the motor is caused to drive the power transmission device, which is included in the power transmission of the machine, i.e. a driving belt 17. The driving belt 17, which is in engagement in the wedge shaped groove 18, drives the driving wheel 16b, the two driving wheel halves/driving members 52 of which in this case are integrated parts of the tool units 50 and 51, causing the tools 3 and 3' to rotate.

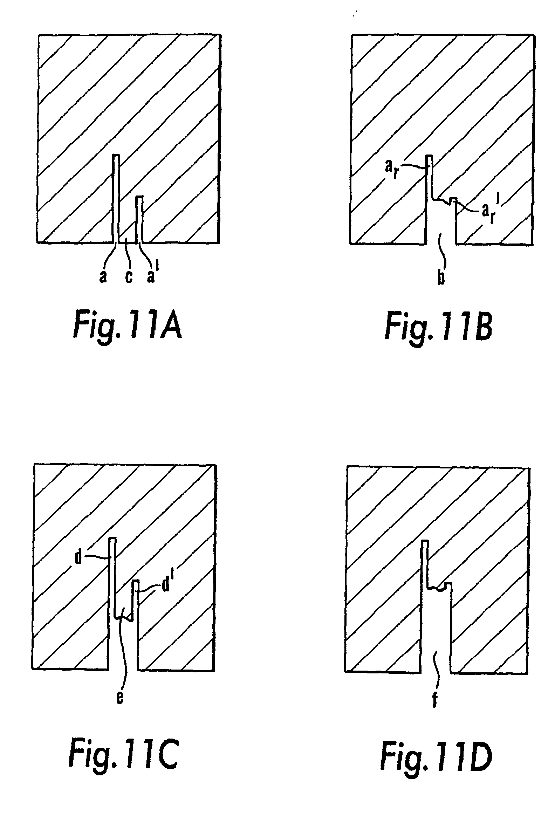

By pressing against the object to be worked, there is first established a saw kerf in the object by means of the larger tool 3. When the tool 3 has penetrated the object to a depth corresponding to the radial difference between the two tools 3 and 3', also the smaller tool 3' begins penetrating the object to form a kerf in the object, parallel with the kerf that is formed by the larger tool 3. The working can proceed in this way until the tools 3 and 3' have penetrated so deeply that the edge guard 38 touches the object. The first kerfs, which thus are established in the object by means of the tools 3 and 3', are designated **a** and **a',** respectively, in Fig. 11A. The work proceeds until the kerfs **a** and **a'** in the object also have achieved a desired length. During this phase, the machine 1 may be moved along the surface of the object with the edge guard 38 sliding against the object.

At least if the conditions are favourable, e.g. that the material of the object that is worked is not too tough, and/or if the distance between the established kerfs in the object are sufficiently short, the material **c** between the kerfs **a** and **a'** loosens successively as they are formed because of the vibrations of the tools and/or because of friction between the tools and the material between the kerfs. The work therefore can proceed continuously by moving the machine 1 along the surface of the object with the edge guard 30 sliding against the bottom of the wider groove that is being formed in the object. During this phase, also the tool carrier/the bar 20, the edge guard 38 and finally, when the blade guard has been folded backwards, also the side guard 35 can be entered into the groove.

If the material **c** between the first kerfs **a** and **a'** do not loosen in connection with the establishment of the kerfs in the object, the machine is operated in the following mode, when the first kerfs have been established, preferably when they also have achieved a desired length. In this case, the machine is withdrawn, so that the tools 3, 3' leave the established kerfs. Next step according to this mode of operating the machine according to the invention is to remove the material **c** between the two first established kerfs **a** and **a'** in the object. The technique, which is employed for removing this material may depend on the kind of material of the object. E.g. depending on the kind of material, the material can be loosened by breaking, hammering, wedging, axing, knocking, vibrating, blowing, spraying, milling, drawing, or prizing or by any combination of any of said or other measures. Thus, there is established a wider groove **b** in the object, which allows the tool units 50, 51 including the bar 20, the driving wheel 16b and the driving belt 17, the edge guard 38 and the side guard 35 to penetrate into the object, Fig. 11B. In the object, there remains a portion **a**_{**r**} of the kerf **a,** which was formed by means of the larger tool 3, possibly portions **a**_{**r**}**'** of the kerf **a'** which was formed by means of the smaller tool 3', which kerf or kerfs **a, a**_{**r**}**'** may be used as guiding trails during the next step of operation, when the operator drives the tools 3, 3' deeper into the object, Fig. 11C. The new kerfs, which during this phase are established in the object, are designated **d** and **d'**, respectively, and the material between the new kerfs has been designated **e** in Fig. 11C. The material **e** can be removed in the same way as has been described in the foregoing, so that a deeper groove **f** which has flat and parallel walls and the same width as the groove **b**, Fig. 11D. The work may proceed in this way by alternately establishing deeper and deeper parallel kerfs and removal of the material between the kerfs until the desired or maximal possible working depth has been achieved. The maximal working depth is restricted by the tool guard 5, the foldable part 37 of which, however, can be folded away such that it does not restrict the depth of penetration. The whole guard 35 may, when the locking members 39 have been released, be displaced in a direction opposite to the direction of penetration, rearwards towards the machine body 2. It is understood that it is possible to work stepwise in this way into the object and that after each working operation by means of the tool units, the material between the kerfs is removed, except after the last working operation, when the desired depth has been achieved by means of the larger tool 3.

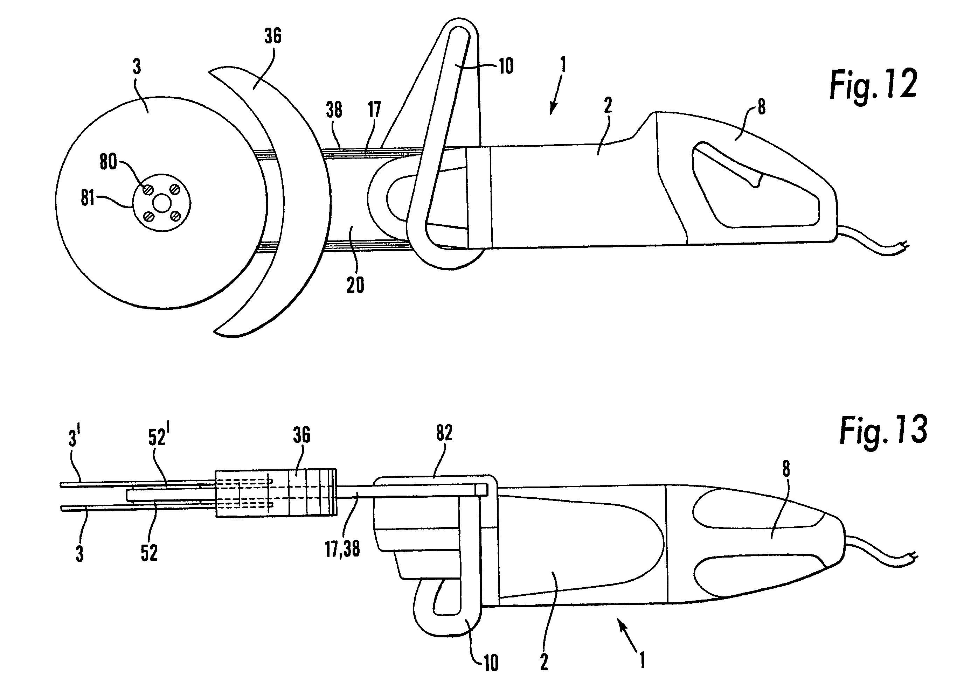

Figs. 12 and 13 show an example of how a machine body 2 of known design, containing an electric driving motor, can be equipped according to the principles of the invention. Thus, in the front part of the machine 1 there is an elongated tool carrier 20 in the form of a flat bar, carrying two diamond-tipped blades 3, 3' of the flat sawing type, each having a driving wheel half 52, 52' secured to the inner side of the saw blades by welding or riveting. The tools/blades 3, 3' in this case are united with one another through recessed screws 80, which extend through a washer 81, which is recessed in one of the tools 3. The screws 80 are secured by screwing in that driving wheel half 52' which is connected to the opposite tool 3'.

A front blade guard 36 is shown only schematically. It is displaceable along the bar 20, which is located adjacent to one side of the machine 1. Suitably the blade guard 3 and a rear driving belt guard 82 can be demounted in order also to make it possible to use the machine 1 for sawing close to walls, roofs, etc. in corners.

## Claims

1. Cutting or sawing machine comprising a machine body (2); a tool assembly comprising at least one disk shaped, rotatable tool (3, 3') having a first side (3a), a second side (3b), and a peripheral edge portion (54)which is the working part of the tool, and at least one rotatable driving member (52, 52') which has a centre of rotation and is coaxial with the tool and provided on the first side of the tool; a power transmission from a power source for rotation of the tool via said driving member; and a tool carrier (20) having a rear end which is connected to the machine body and a front end in which said at least one tool is rotatably mounted, wherein the side of the peripheral edge portion (54) which is part of said second side (3b) of the tool defines a plane which forms a limit of the, in the axial direction, maximally projecting part of the tool assembly; the entire machine body is provided at a distance from the tool assembly with reference to the radial direction of the tool assembly, and the tool carrier, which is elongated, extends from the machine body over said distance to at least said centre of rotation, and wherein a through hole (30) and a bearing (31) is provided in the front end of the tool carrier, **characterized in**
- **that** an annular recess (65) is provided in said at least one driving member (52) between a peripheral part (63) and an axle part (62) of the driving member, an axially displaced, bridging part (66, 67) connecting said peripheral and axle parts, said bridging part having an outer side (56) facing the tool and an inner side on the opposite side of the bridging part,
- **that** the bearing (31) is mounted on said axle part in said through hole (30), and
- **that** a lateral side of the bearing faces in the direction towards the inner side of said bridging part.

2. Machine according to claim 1, **characterised in**
- **that** the tool assembly comprises at least two parallel coaxial tools, comprising two outer tools,
- **that** each of said outer tools has a first side which is an inner side (3a), a second side which is an outer side (3b) and a peripheral edge portion (54) which is the working part of the tool, and
- **that** that side of the peripheral edge portion of the outer tools which is part of the outer side of respective tool defines a plane which forms a limit of the, in the radial direction, maximally projecting parts of the tool assembly in the region of said outer sides.

3. Machine according to claim 2, **characterised in that** the number of tools of the tool assembly is two.

4. Machine according to claim 2 or 3, **characterised in that** the tools have equally large diameters.

5. Machine according to any of claims 2-4, **characterised in that** the distance between the outer tools is smaller than the radius of the tools.

6. Machine according to any of claims 2, 3 or 5, **characterised in** the tools have differently large diameters.

7. Machine according to claim 3 or 6, **characterised in that** the distance between the outer tools is smaller than the radius of the smallest tool.

8. Machine according to any of claims 1-7, **characterised in that** the width of the tool carrier is substantially larger than its thickness, wherein the width is the extension of the tool carrier in a plane which is parallel with the plane of the tool/the tools and perpendicular to the longitudinal direction of the tool carrier.

9. Machine according to any of claims 1-8, **characterised in that** the tool carrier consists of an elongated bar.

10. Machine according to any of claims 1-9, **characterised in that** the driving member forms part of a driving wheel (16b) having at least one circumferential driving surface (64).

11. Machine according to claim 10, **characterised in that** the driving wheel (16b) comprises a first part (52) and a second part (52'), each of said parts having a circumferential driving surface (64), said driving surfaces being provided on each side of a plane which is perpendicular to the axles of rotation of the driving wheel and located between said parts.

12. Machine according to claim 11, **characterised in that** the two driving surfaces (64) of the driving wheel, one on each of said parts (52, 52'), are identically designed.

13. Machine according to claim 12, **characterised in that** the driving surface or driving surfaces (64) form at least one power transmission groove for a power transmission device.

14. Machine according to any of claims 11-13, **characterised in that** the two driving surfaces (64) consist of bevelled surfaces on said parts (52, 52'), said bevelled surfaces between them forming a V-belt groove for a V-belt.

15. Machine according to any of claims 11-13, **characterised in that** the two driving surfaces (64) are toothed and form a pair of grooves for a toothed belt, and that the power transmission device is a toothed belt cooperating with the teeth of said grooves for the toothed belt.

16. Machine according to any of claims 11-15, **characterised in that** the parts (52, 52') of the driving wheel are provided on each side of the tool carrier.

17. Machine according to any of claims 1-16, **characterised in that** a bearing (31) is provided in the front end of the tool carrier.

18. Machine according to claim 17, **characterised in that** the driving wheel has an axle including said axle part (62), which axle extends between said two driving wheel parts (52,52') through a hole (30) in the tool carrier, is connected to said driving wheel parts, and is journalled in the bearing in the tool carrier.

19. Machine according to claim 18, **characterised in that** each of the two driving wheel parts (52, 52') has an axle spindle (62, 62'), said axle spindles extending towards one another and forming in combination said axle.

20. Machine according to claim 19, **characterised in that** the two driving wheel parts (52, 52'), including the axle spindles belonging to them, are identically designed.

21. Machine according to any of claims 1-20, **characterised in that** the axial extension of the tool assembly is at least 10 and maximally 110 mm, preferably maximally 60, suitably maximally 30 mm.

22. Machine according to any of claims 2-21, **characterised in that** the distance between the tools is at least 5 and maximally 100 mm, preferably maximally 50, suitably maximally 20 mm.

23. Machine according to any of claims 1 or 8-21, **characterised in that** it comprises only one tool and that the axial extension of the tool assembly, comprising tool and driving member in the region of the front end of the tool carrier, is at least 5, preferably at least 10 mm and maximally 50, preferably maximally 25 mm.

24. Machine according to any of claims 1-23, **characterised in that** said driving member and tool are fixedly connected to one another.

25. Machine according to any of claims 1-23, **characterised in that** said driving member and tool are provided to rotate together but are disengagably connected to one another.

26. Machine according to any of claims 1-25, **characterised in that** said driving member is an integrated part of the tool.

27. Machine according to any of claims 18-26, **characterised in that** at least one through hole extends through the shaft, and that said driving member/driving members and tool/tools are connected to one another to form a united tool assembly by means of a screw joint (73, 75) through said hole/holes.

28. Machine according to any of claims 1-27, **characterised in that** the driving wheel extends beyond the front end of the tool carrier.

29. Machine according to any of claims 1-28, **characterised in that** the power transmission device, which is endless, extends along the tool carrier and has a width which is smaller than the width of the driving wheel.

30. Machine according to any of claims 3-22 and 24-29, **characterised in that** the power transmission device, which is endless, extends along the tool carrier and has a width which is smaller than the distance between the two disk shaped tools.

31. Machine according to any of the previous claims, **characterised in that** it comprises guard devices for the power transmission device, said guard devices comprising an edge guard (38) which extends on the outer side of the power transmission device along at least a section thereof which is exposed to the environment.

32. Machine according to claim 31, **characterised in that** the edge guard (38) comprises a bent metal rail having at least as large breadth as the power transmission device but smaller or at least not larger breadth than the distance between the disk shaped tools having a driving member on said first sides which face one another.

33. Machine according to claim 31, **characterised in that** said guard devices comprise side guards (35) on each side of the power transmission device, and that the distance between the outer surfaces of the side guards is smaller than the axial extension of the tool assembly.

34. Method for cutting and sawing by means of a machine according to claim 1, comprising
a) that at least two substantially parallel kerfs are established to a certain depth in an object to be worked,
b) that at least part of the material between the kerfs is removed so that a wider groove is established in the object, and
c) that at least one of the kerfs then is made deeper in the extension of said kerf.

35. Method according to claim 34, **characterised in that** at least the main part of the material between the kerfs is removed.

36. Method according to claim 34 or 35, **characterised in that** all kerfs are made deeper in the extension of the respective kerfs after at least part of the material between the kerfs has been removed.

37. Method according to any of claims 34-36, **characterised in that** the steps are repeated, so that a deeper groove having substantially parallel walls and the same breadth as the first established groove is established in the object.

38. Method according to any of claim 34-37, **characterised in that** at least two parallel kerfs having different depths are established in the object, and that at least the bottom portion of any of the kerfs is used as a guiding means at the establishment of continued, deeper kerfs in the object.

39. Method according to any of claims 34-38, **characterised in that** two parallel kerfs are established in the object.

40. Method according to any of claims 34-39, **characterised in that** the material between the kerfs is removed by loosening it by breaking, hammering, wedging, axing, knocking, vibrating, blowing, milling, drawing, or prizing or by any combination comprising one or more of said measures.

41. Method according to any of claims 34-40, **characterised in that** the material between the kerfs is removed by means of the tools by means of which the kerfs are established.

42. Method according to any of claims 34-41, **characterised in that** the material between the kerfs is removed by means of the tools as the kerfs are being established.

## Patentansprüche

1. Trenn- oder Sägemaschine, die folgendes umfaßt: ein Maschinengehäuse (2); eine Werkzeugbaugruppe mit mindestens einem scheibenförmigen, drehbaren Werkzeug (3, 3') mit einer ersten Seite (3a), einer zweiten Seite (3b), einem peripheren Kantenteil (54), bei dem es sich um das Arbeitsteil des Werkzeugs handelt, und mit mindestens einem drehbaren Antriebselement (52, 52'), das über ein Drehzentrum verfügt, koaxial zum Werkzeug verläuft und an einer ersten Seite des Werkzeugs angebracht ist; eine von einer Leistungsquelle abgehende Leistungsübertragung zum Drehen des Werkzeugs über das Antriebselement; und einen Werkzeugträger (20) mit einem hinteren Ende, das mit dem Maschinengehäuse verbunden ist, und einem vorderen Ende, in dem das mindestens eine Werkzeug drehbar montiert ist, wobei die Seite des peripheren Kantenteils (54), welche Teil der zweiten Seite (3b) des Werkzeugs ist, eine Ebene definiert, die eine Begrenzung des in axialer Richtung maximal vorstehenden Teils der Werkzeugbaugruppe bildet; wobei das gesamte Maschinengehäuse sich in bezug auf die radiale Richtung der Werkzeugbaugruppe in einer bestimmten Entfernung zu dieser befindet, wobei sich der Werkzeugträger, welcher länglich ausgebildet ist, vom Maschinengehäuse über diese Entfernung hinweg bis mindestens zu dem Drehzentrum verläuft, und wobei das vordere Ende des Werkzeugträgers mit einem Durchgangsloch (30) und einem Lager (31) versehen ist, **dadurch gekennzeichnet,**
- **daß** in dem mindestens einen Antriebselement (52) zwischen einem peripheren Teil (63) und einem Achsenteil (62) des Antriebselements eine ringförmige Vertiefung angeordnet ist, wobei ein axial versetztes Überbrückungsteil (66, 67) das periphere Teil mit dem Achsenteil verbindet, wobei das Überbrückungsteil über eine dem Werkzeug gegenüberliegende Außenseite (56) und an der gegenüberliegenden Seite des Überbrückungsteils über eine Innenseite verfügt,
- **daß** das Lager (31 ) in dem Durchgangsloch (30) auf dem Achsenteil montiert ist und
- **daß** eine laterale Seite des Lagers in Richtung zu der Innenseite des Überbrückungsteils weist.

2. Maschine nach Anspruch 1, **dadurch gekennzeichnet,**
- **daß** die Werkzeugbaugruppe mindestens zwei parallele koaxiale Werkzeuge umfaßt, die ihrerseits zwei äußere Werkzeuge umfassen,
- **daß** jedes der äußeren Werkzeuge eine erste Seite, bei der es sich um eine Innenseite (3a) handelt, eine zweite Seite, bei der es sich um eine Außenseite (3b) handelt, sowie einen peripheren Kantenteil (54), bei dem es sich um das Arbeitsteil des Werkzeugs handelt, aufweist und
- daß jene Seite des peripheren Kantenteils der äußeren Werkzeuge, die Teil der Außenseite des jeweiligen Werkzeugs ist, eine Ebene definiert, die eine Begrenzung der in radialer Richtung maximal vorstehenden Teile der Werkzeugbaugruppe im Bereich der Außenseiten bildet.

3. Maschine nach Anspruch 2, **dadurch gekennzeichnet, daß** die Werkzeugbaugruppe zwei Werkzeuge umfaßt.

4. Maschine nach Anspruch 2 oder 3, **dadurch gekennzeichnet, daß** die Werkzeuge gleich große Durchmesser haben.

5. Maschine nach einem der Ansprüche 2-4, **dadurch gekennzeichnet, daß** der Abstand zwischen den äußeren Werkzeugen geringer als der Radius der Werkzeuge ist.

6. Maschine nach einem der Ansprüche 2, 3 oder 5, **dadurch gekennzeichnet, daß** die Werkzeuge unterschiedlich große Durchmesser haben.

7. Maschine nach Anspruch 3 oder 6, **dadurch gekennzeichnet, daß** der Abstand zwischen den äußeren Werkzeugen kleiner als der Radius des kleinsten Werkzeugs ist.

8. Maschine nach einem der Ansprüche 1-7, **dadurch gekennzeichnet, daß** die Breite des Werkzeugträgers wesentlich größer als seine Dicke ist, wobei es sich bei der Breite um die Erstreckung des Werkzeugträgers in einer Ebene handelt, die parallel zur Ebene des Werkzeugs/der Werkzeuge und senkrecht zur Längsrichtung des Werkzeugträgers verläuft.

9. Maschine nach einem der Ansprüche 1-8, **dadurch gekennzeichnet, daß** der Werkzeugträger aus einer verlängerten Stange besteht.

10. Maschine nach einem der Ansprüche 1-9, **dadurch gekennzeichnet, daß** das Antriebselement Teil eines Antriebsrades (16b) ist, das über mindestens eine umlaufende Antriebsfläche (64) verfügt.

11. Maschine nach Anspruch 10, **dadurch gekennzeichnet, daß** das Antriebsrad (16b) einen ersten Teil (52) und einen zweiten Teil (52') aufweist, von denen ein jedes über eine umlaufende Antriebsfläche (64) verfügt, wobei die Antriebsflächen auf jeder Seite einer Ebene angebracht sind, die senkrecht zu den Drehachsen des Antriebsrads verläuft und sich zwischen den Teilen befindet.

12. Maschine nach Anspruch 11, **dadurch gekennzeichnet, daß** die beiden Antriebsflächen (64) des Antriebsrades, jeweils eine auf jedem der besagten Teile (52, 52'), identisch gestaltet sind.

13. Maschine nach Anspruch 12, **dadurch gekennzeichnet, daß** die Antriebsfläche bzw. die Antriebsflächen (64) zumindest eine zur Leistungsübertragung genutzte Nut einer Leistungsübertragungsvorrichtung bilden.

14. Maschine nach einem der Ansprüche 11-13, **dadurch gekennzeichnet, daß** die beiden Antriebsflächen (64) aus abgeschrägten Oberflächen auf den besagten Teilen (52, 52') bestehen, wobei abgeschrägten Oberflächen zwischen sich eine keilförmige Nut für einen Keilriemen bilden.

15. Maschine nach einem der Ansprüche 11-13, **dadurch gekennzeichnet, daß** die beiden Antriebsflächen (64) mit Zähnen versehen sind und ein Paar Nuten für einen Zahnriemen bilden, und daß es sich bei der Leistungsübertragungsvorrichtung um einen Zahnriemen handelt, der mit den Zähnen der Nuten für den Zahnriemen kooperiert.

16. Maschine nach einem der Ansprüche 11-15, **dadurch gekennzeichnet, daß** die Teile (52, 52') des Antriebsrades an jeder Seite des Werkzeugträgers angebracht sind.

17. Maschine nach einem der Ansprüche 1-16, **dadurch gekennzeichnet, daß** sich am vorderen Ende des Werkzeugträgers ein Lager (31) befindet.

18. Maschine nach Anspruch 17, **dadurch gekennzeichnet, daß** das Antriebsrad eine Achse aufweist, die das besagte Achsenteils (62) einschließt, wobei die Achse zwischen den besagten beiden Antriebsradteilen (52, 52') durch eine Öffnung (30) in dem Werkzeugträger verläuft, mit den Antriebsradteilen verbunden und in dem Lager des Werkzeugträgers gelagert ist.

19. Maschine nach Anspruch 18, **dadurch gekennzeichnet, daß** jedes der beiden Antriebsradteile (52, 52') über eine Achsspindel (62, 62') verfügt, wobei die Achsspindeln aufeinander zu verlaufen und in Kombination die Achse bilden.

20. Maschine nach Anspruch 19, **dadurch gekennzeichnet, daß** die beiden Antriebsradteile (52, 52'), einschließlich der zu ihnen gehörenden Achsspindeln, identisch gestaltet sind.

21. Maschine nach einem der Ansprüche 1-20, **dadurch gekennzeichnet, daß** die axiale Ausdehnung der Werkzeugbaugruppe wenigstens 10 und maximal 110 mm, vorzugsweise maximal 60 mm und angemessenerweise maximal 30 mm beträgt.

22. Maschine nach einem der Ansprüche 2-21, **dadurch gekennzeichnet, daß** der Abstand zwischen den Werkzeugen wenigstens 5 und maximal 100 mm, vorzugsweise maximal 50 mm und angemessenerweise maximal 20 mm beträgt.

23. Maschine nach einem der Ansprüche 1 oder 8-21, **dadurch gekennzeichnet, daß** sie lediglich ein Werkzeug umfaßt und daß die axiale Erstreckung der Werkzeugbaugruppe, bestehend aus Werkzeug und Antriebselement im Bereich des vorderen Endes des Werkzeugträgers, wenigstens 5, vorzugsweise wenigstens 10 und maximal 50 mm, vorzugsweise maximal 25 mm beträgt.

24. Maschine nach einem der Ansprüche 1-23, **dadurch gekennzeichnet, daß** das Antriebselement und das Werkzeug fest miteinander verbunden sind.

25. Maschine nach einem der Ansprüche 1-23, **dadurch gekennzeichnet, daß** das Antriebselement und das Werkzeug so angebracht sind, daß sie sich gemeinsam drehen, jedoch die zwischen ihnen bestehende Verbindung ausrückbar ist.

26. Maschine nach einem der Ansprüche 1-25, **dadurch gekennzeichnet, daß** das Antriebselement ein integraler Bestandteil des Werkzeugs ist.

27. Maschine nach einem der Ansprüche 18-26, **dadurch gekennzeichnet, daß** mindestens ein Durchgangsloch durch die Welle hindurch verläuft und daß das besagte Antriebselement bzw. die Antriebselemente und das Werkzeug/die Werkzeuge miteinander verbunden sind, so daß durch eine durch das Loch/die Löcher hindurch verlaufende Schraubverbindung (73, 75) eine vereinte Werkzeugbaugruppe entsteht.

28. Maschine nach einem der Ansprüche 1-27, **dadurch gekennzeichnet, daß** das Antriebsrad über das vordere Ende des Werkzeugträgers hinaus verläuft.

29. Maschine nach einem der Ansprüche 1-28, **dadurch gekennzeichnet, daß** die Leistungsübertragungsvorrichtung, welche eine endlose ist, entlang dem Werkzeugträger verläuft und in ihrer Breite kleiner als das Antriebsrad in seiner Breite ist.

30. Maschine nach einem der Ansprüche 3-22 und 24-29, **dadurch gekennzeichnet, daß** die Leistungsübertragungsvorrichtung, welche eine endlose ist, entlang dem Werkzeugträger verläuft und in ihrer Breite kleiner als der Abstand zwischen den beiden scheibenförmigen Werkzeugen ist.

31. Maschine nach einem der vorstehenden Ansprüche, **dadurch gekennzeichnet, daß** sie Schutzvorrichtungen für die Leistungsübertragungsvorrichtung umfaßt, wobei die Schutzvorrichtungen einen Kantenschutz (38) umfassen, der an der Außenseite der Leistungsübertragungsvorrichtung entlang zumindest eines Abschnittes derselben verläuft, der zu der Umgebung offen ist.

32. Maschine nach Anspruch 31, **dadurch gekennzeichnet, daß** der Kantenschutz (**38**) eine gebogene Metallschiene umfaßt, die zumindest so breit wie die Leistungsübertragungsvorrichtung, jedoch schmaler oder zumindest nicht breiter als der Abstand zwischen den scheibenförmigen Werkzeugen mit einem Antriebselement an den ersten Seiten ist, die einander gegenüberliegen.

33. Maschine nach Anspruch 31, **dadurch gekennzeichnet, daß** die Schutzvorrichtung auf jeder Seite der Leistungsübertragungsvorrichtung Seitenschutzeinrichtungen (35) aufweist und daß der Abstand zwischen den Außenflächen der Seitenschutzeinrichtungen kleiner als die axiale Erstreckung der Werkzeugbaugruppe ist.

34. Verfahren zum Trennen und Sägen mit einer Maschine gemäß Anspruch 1, wobei
a) mindestens zwei im wesentlichen parallel verlaufende Fugen bis zu einer bestimmten Tiefe in ein zu bearbeitendes Werkstück eingearbeitet werden,
b) mindestens ein Teil des Materials zwischen den Fugen entfernt wird, so daß in dem Werkstück eine breitere Fuge entsteht, und
c) mindestens eine der Fugen in Ausdehnungsrichtung der besagten Fuge danach weiter vertieft wird.

35. Verfahren nach Anspruch 34, **dadurch gekennzeichnet, daß** zumindest der größte Teil des Materials zwischen den Fugen entfernt wird.

36. Verfahren nach Anspruch 34 oder 35, **dadurch gekennzeichnet, daß** nach der Entfernung des zumindest eines Teils des Materials zwischen den Fugen alle Fugen in den Ausdehnungsrichtungen weiter vertieft werden.

37. Verfahren nach einem der Ansprüche 34-36, **dadurch gekennzeichnet, daß** die Schritte wiederholt werden, so daß im Werkstück eine tiefere Nut mit im wesentlichen parallelen Wänden und derselben Breite wie die zuerst eingearbeitete Nut entsteht.

38. Verfahren nach einem der Ansprüche 34-37, **dadurch gekennzeichnet, daß** zumindest zwei parallele Fugen mit unterschiedlichen Tiefen in das Werkstück eingearbeitet werden und daß zumindest der untere Teil von einer beliebigen der Fugen als Führungselement bei der Ausarbeitung fortgesetzter, tieferer Fugen im Werkstück genutzt wird.

39. Verfahren nach einem der Ansprüche 34-38, **dadurch gekennzeichnet, daß** im Werkstück zwei parallele Fugen geschaffen werden.

40. Verfahren nach einem der Ansprüche 34-39, **dadurch gekennzeichnet, daß** das Material zwischen den Fugen durch Lösen desselben mittels Brechen, Hämmern, Keilbearbeitung, Behauen, Klopfen, Vibrieren, Blasen, Fräsen, Ziehen, Stemmen oder durch eine Kombination einer oder mehrerer der besagten Maßnahmen entfernt wird.

41. Verfahren nach einem der Ansprüche 34-40, **dadurch gekennzeichnet, daß** das Material zwischen den Fugen durch die Werkzeuge entfernt wird, durch die auch die Fugen ausgearbeitet werden.

42. Verfahren nach einem der Ansprüche 34-41, **dadurch gekennzeichnet, daß** das Material zwischen den Fugen während des Ausarbeitens der Fugen durch die Werkzeuge entfernt wird.

## Revendications

1. Machine à couper ou à scier comprenant un corps (2) de machine ; un ensemble d'outils comprenant au moins un outil rotatif en forme de disque (3, 3') comportant un premier côté (3a), un second côté (3b), et une partie (54) de bord périphérique qui constitue la partie de travail de l'outil, et au moins un élément d'entraînement rotatif (52, 52') qui a un centre de rotation et qui est coaxial à l'outil et disposé sur le premier côté de l'outil ; une transmission de puissance d'une source de puissance pour rotation de l'outil via ledit élément d'entraînement ; et un porte-outil (20) comportant une extrémité arrière qui est reliée au corps de machine et une extrémité avant dans laquelle ledit au moins un outil est monté mobile en rotation, dans laquelle le côté de la partie (54) de bord périphérique qui fait partie dudit second côté (3b) de l'outil définit un plan qui forme une limite, dans la direction axiale, de la partie faisant le plus saillie de l'ensemble d'outils ; tout le corps de machine est pourvu, à une certaine distance de l'ensemble d'outils, d'une référence à la direction radiale de l'ensemble d'outils, et le porte-outil, qui est allongé, s'étend du corps de machine sur ladite distance jusqu'au moins ledit centre de rotation, et dans laquelle un trou traversant (30) et un palier (31) sont prévus dans l'extrémité avant du porte-outil, **caractérisée en ce que**
- un évidement annulaire (65) est réalisé dans ledit au moins un élément (52) d'entraînement entre une partie périphérique (63) et une partie (62) de moyeu de l'élément d'entraînement, une partie (66, 67) de liaison décalée axialement reliant lesdites parties périphérique et de moyeu, ladite partie de liaison comportant un côté extérieur (56) faisant face à l'outil et un côté intérieur situé du côté opposé de la partie de liaison,
- le palier (31) est monté sur ladite partie de moyeu dans ledit trou traversant (30), et
- un côté latéral du palier fait face dans la direction vers le côté intérieur de ladite partie de liaison.

2. Machine selon la revendication 1, **caractérisée en ce que**
- l'ensemble d'outils comprend au moins deux outils coaxiaux parallèles, comprenant deux outils extérieurs,
- chacun desdits outils extérieurs comporte un premier côté qui est un côté intérieur (3a), un second côté qui est un côté extérieur (3b) et une partie (54) de bord périphérique qui constitue la partie de travail de l'outil, et
- le côté de la partie de bord périphérique des outils extérieurs qui fait partie du côté extérieur d'un outil respectif définit un plan qui forme une limite, dans la direction radiale, des parties faisant le plus saillie de l'ensemble d'outils dans la région desdits côtés extérieurs.

3. Machine selon la revendication 2, **caractérisée en ce que** le nombre d'outils de l'ensemble d'outils est de deux.

4. Machine selon la revendication 2 ou 3, **caractérisée en ce que** les outils ont de grands diamètres égaux.

5. Machine selon l'une quelconque des revendications 2 à 4, **caractérisée en ce que** la distance entre les outils extérieurs est plus petite que le rayon des outils.

6. Machine selon l'une quelconque des revendications 2, 3 ou 5, **caractérisée en ce que** les outils ont de grands diamètres différents.

7. Machine selon la revendication 3 ou 6, **caractérisée en ce que** la distance entre les outils extérieurs est plus petite que le rayon de l'outil le plus petit.

8. Machine selon l'une quelconque des revendications 1 à 7, **caractérisée en ce que** la largeur du porte-outil est sensiblement plus grande que son épaisseur, dans laquelle la largeur est l'étendue du porte-outil dans un plan qui est parallèle au plan de l'outil/des outils et perpendiculaire à la direction longitudinale du porte-outil.

9. Machine selon l'une quelconque des revendications 1 à 8, **caractérisée en ce que** le porte-outil est constitué d'une barre allongée.

10. Machine selon l'une quelconque des revendications 1 à 9, **caractérisée en ce que** l'élément d'entraînement fait partie d'une roue (16b) d'entraînement comportant au moins une surface circonférentielle (64) d'entraînement.

11. Machine selon la revendication 10, **caractérisée en ce que** la roue (16b) d'entraînement comprend une première partie (52) et une seconde partie (52'), chacune desdites parties comportant une surface circonférentielle (64) d'entraînement, lesdites surfaces d'entraînement étant disposées de chaque côté d'un plan qui est perpendiculaire aux moyeux de rotation de la roue d'entraînement et situées entre lesdites parties.

12. Machine selon la revendication 11, **caractérisée en ce que** les deux surfaces (64) d'entraînement de la roue d'entraînement, une sur chacune desdites parties (52, 52'), sont conçues de manière identique.

13. Machine selon la revendication 12, **caractérisée en ce que** la surface d'entraînement ou les surfaces (64) d'entraînement forment au moins une rainure de transmission de puissance d'un dispositif de transmission de puissance.

14. Machine selon l'une quelconque des revendications 11 à 13, **caractérisée en ce que** les deux surfaces (64) d'entraînement sont constituées de surfaces chanfreinées sur lesdites parties (52, 52'), lesdites surfaces chanfreinées formant, entre elles, une rainure de courroie trapézoïdale destinée à une courroie trapézoïdale.

15. Machine selon l'une quelconque des revendications 11 à 13, **caractérisée en ce que** les deux surfaces (64) d'entraînement sont dentées et forment une paire de rainures destinée à une courroie crantée, et **en ce que** le dispositif de transmission de puissance est une courroie crantée coopérant avec les crans desdites rainures de la courroie crantée.

16. Machine selon l'une quelconque des revendications 11 à 15, **caractérisée en ce que** les parties (52, 52') de la roue d'entraînement sont disposées de chaque côté du porte-outil.

17. Machine selon l'une quelconque des revendications 1 à 16, **caractérisée en ce qu'**un palier (31) est prévu dans l'extrémité avant du porte-outil.

18. Machine selon la revendication 17, **caractérisée en ce que** la roue d'entraînement comporte un moyeu incluant ladite partie (62) de moyeu, lequel moyeu s'étend entre lesdites deux parties (52, 52') de roue d'entraînement à travers un trou (30) réalisé dans le porte-outil, est en prise avec lesdites parties de roue d'entraînement, et est monté mobile en rotation dans le palier qui se trouve dans le porte-outil.

19. Machine selon la revendication 18, **caractérisée en ce que** chacune des deux parties (52, 52') de roue d'entraînement comporte une broche (62, 62') de moyeu, lesdites broches de moyeu s'étendant l'une vers l'autre et formant en combinaison ledit moyeu.

20. Machine selon la revendication 19, **caractérisée en ce que** les deux parties (52, 52') de roue d'entraînement, incluant les broches de moyeu qui leur appartiennent, sont conçues de manière identique.

21. Machine selon l'une quelconque des revendications 1 à 20, **caractérisée en ce que** l'étendue axiale de l'ensemble d'outils est d'au moins 10 et d'au plus 110 mm, de préférence d'au plus 60, de manière appropriée d'au plus 30 mm.

22. Machine selon l'une quelconque des revendications 2 à 21, **caractérisée en ce que** la distance entre les outils est d'au moins 5 et d'au plus 100 mm, de préférence d'au plus 50, de manière appropriée d'au plus 20 mm.

23. Machine selon l'une quelconque des revendications 1 ou 8 à 21, **caractérisée en ce qu'**elle ne comprend qu'un outil et **en ce que** l'étendue axiale de l'ensemble d'outils, comprenant l'outil et l'élément d'entraînement dans la région de l'extrémité avant du porte-outil, est d'au moins 5, de préférence d'au moins 10 mm et d'au plus 50, de préférence d'au plus 25 mm.

24. Machine selon l'une quelconque des revendications 1 à 23, **caractérisée en ce que** ledit élément d'entraînement et ledit outil sont en prise fixe l'un avec l'autre.

25. Machine selon l'une quelconque des revendications 1 à 23, **caractérisée en ce que** ledit élément d'entraînement et ledit outil sont prévus pour tourner conjointement, mais sont en prise débrayable l'un avec l'autre.

26. Machine selon l'une quelconque des revendications 1 à 25, **caractérisée en ce que** ledit élément d'entraînement fait partie intégrante de l'outil.

27. Machine selon l'une quelconque des revendications 18 à 26, **caractérisée en ce qu'**au moins un trou traversant s'étend à travers l'axe, et **en ce que** ledit élément d'entraînement/lesdits éléments d'entraînement et ledit outil/lesdits outils sont en prise les uns avec les autres pour former un ensemble d'outils unitaires au moyen d'un assemblage à vis (73, 75) traversant ledit trou/lesdits trous.

28. Machine selon l'une quelconque des revendications 1 à 27, **caractérisée en ce que** la roue d'entraînement s'étend au delà de l'extrémité avant du porte-outil.

29. Machine selon l'une quelconque des revendications 1 à 28, **caractérisée en ce que** le dispositif de transmission de puissance, qui est sans fin, s'étend le long du porte-outil et a une largeur qui est plus petite que la largeur de la roue d'entraînement.

30. Machine selon l'une quelconque des revendications 3 à 22 et 24 à 29, **caractérisée en ce que** le dispositif de transmission de puissance, qui est sans fin, s'étend le long du porte-outil et a une largeur qui est plus petite que la distance entre les deux outils en forme de disque.

31. Machine selon l'une quelconque des revendications précédentes, **caractérisée en ce qu'**elle comprend des dispositifs de protection destinés au dispositif de transmission de puissance, lesdits dispositifs de protection comprenant une protection (38) de bord qui s'étend sur le côté extérieur du dispositif de transmission de puissance le long d'au moins sa section qui est exposée à l'environnement.

32. Machine selon la revendication 31, **caractérisée en ce que** la protection (38) de bord comprend un rail métallique incurvé ayant au moins une largeur aussi grande que le dispositif de transmission de puissance mais une largeur plus petite ou au moins pas plus grande que la distance entre les outils en forme de disque comportant un élément d'entraînement sur lesdits premiers côtés qui se font face l'un à l'autre.

33. Machine selon la revendication 31, **caractérisée en ce que** lesdits dispositifs de protection comprennent des protections latérales (35) de chaque côté du dispositif de transmission de puissance, et **en ce que** la distance entre les surfaces extérieures des protections latérales est plus petite que l'étendue axiale de l'ensemble d'outils.

34. Procédé pour couper et scier au moyen d'une machine selon la revendication 1, comprenant
a) le fait d'établir au moins deux entailles sensiblement parallèles sur une certaine profondeur dans un objet à usiner,
b) le fait d'éliminer au moins la matière qui se trouve entre les entailles de façon à établir une rainure plus large dans l'objet, et
c) le fait de réaliser ensuite au moins l'une des entailles plus profonde dans l'étendue de ladite entaille.

35. Procédé selon la revendication 34, **caractérisé en ce qu'**au moins la partie principale de la matière qui se trouve entre les entailles est éliminée.

36. Procédé selon la revendication 34 ou 35, **caractérisé en ce que** toutes les entailles sont réalisées plus profondes dans l'étendue des entailles respectives après élimination d'au moins une partie de la matière qui se trouve entre les entailles.

37. Procédé selon l'une quelconque des revendications 34 à 36, **caractérisé en ce que** l'on répète les étapes, de façon à établir une rainure plus profonde comportant des parois sensiblement parallèles et ayant la même largeur que la rainure établie en premier dans l'objet.

38. Procédé selon l'une quelconque des revendications 34 à 37, **caractérisé en ce qu'**au moins deux entailles parallèles ayant des profondeurs différentes sont établies dans l'objet, et **en ce qu'**au moins la partie de fond de l'une quelconque des entailles est utilisée en tant que moyen de guidage lors de l'établissement d'entailles plus profondes et continues dans l'objet.

39. Procédé selon l'une quelconque des revendications 34 à 38, **caractérisé en ce que** deux entailles parallèles sont établies dans l'objet.

40. Procédé selon l'une quelconque des revendications 34 à 39, **caractérisé en ce que** la matière qui se trouve entre les entailles est éliminée par séparation de celle-ci, par rupture, martelage, coinçage, cognage, frappe, vibration, soufflage, fraisage, arrachage, ou application d'un levier, ou par une combinaison quelconque comprenant une ou plusieurs desdites mesures.

41. Procédé selon l'une quelconque des revendications 34 à 40, **caractérisé en ce que** la matière qui se trouve entre les entailles est éliminée au moyen des outils à l'aide desquels on établit les entailles.

42. Procédé selon l'une quelconque des revendications 34 à 41, **caractérisé en ce que** la matière qui se trouve entre les entailles est éliminée au moyen des outils lors de l'établissement des entailles.
